# EUROPÄISCHE PATENTSCHRIFT

(11) **EP 1 933 968 B1**
(45) Veröffentlichungstag und Bekanntmachung des Hinweises auf die Patenterteilung: **29.08.2012**
(21) Anmeldenummer: 06764247.0
(22) Anmeldetag: 21.07.2006
(51) Int. Cl.: B01D 36/00

(54) **KRAFTSTOFFFILTER**
FUEL FILTER
FILTRE A CARBURANT

(30) Priorität: 22.07.2005 DE 102005035003; 12.09.2005 DE 202005014451 U
(43) Veröffentlichungstag der Anmeldung: 25.06.2008
(60) Teilanmeldung: 09154890.9
(73) Patentinhaber: MANN+HUMMEL GmbH, 71638 Ludwigsburg (DE)
(72) Erfinder: KIEDAISCH, Steffi, 73037 Göppingen (DE); SCHMID, Thorsten, 70374 Stuttgart (DE); STRASSENBERGER, Norbert, 84166 Adlkofen (DE); STURGESS, Christopher Marc, 70825 Korntal (DE); KLINSER, Andreas, 71638 Ludwigsburg (DE); FRANZ, Andreas, 71638 Ludwigsburg (DE); FINDEISEN, Holger, 71672 Marbach a. N. (DE); MICKE, Michael, 589473 Singapore (SG); STEUSS, Andreas, 74321 Bietigheim-Bissingen (DE)
(86) Internationale Anmeldenummer: PCT/EP2006/064510
(87) Internationale Veröffentlichungsnummer: WO 2007/010037

(56) Entgegenhaltungen:
- DE-C1- 19 835 525

## Beschreibung

### Technisches Gebiet

Die Erfindung betrifft einen Kraftstofffilter, insbesondere für den Betrieb von Brennkraftmaschinen von Fahrzeugen.

### Stand der Technik

Es sind beispielweise aus der DE 198 35 525 C1Filter bekannt mit einem in einem Innenraum angeordneten Filtereinsatz mit einer mit einem Verschlusselement verschließbaren Entlüftungsleitung, die in Abhängigkeit des im Zwischenraum herrschenden Füllstandes das Verschlusselement betätigt. Es sind auch Kraftstofffilter zur Reinigung von Kraftstoffen bekannt, welche im Druck- oder Saugbetrieb arbeiten. Durch Kraftstofffilter werden Verunreinigungen, welche im Kraftstoff enthalten sind, daran gehindert, zu den Brennkraftmaschinen zu gelangen. In dem Kraftstoff ist fein verteilte bzw. gelöste Luft enthalten. Beim Betreiben des Kraftstofffilters im Saugbetrieb kommt es zum Ausgasen der Luft. Diese Luft sammelt sich im Kraftstofffilter auf der Rohseite. Da die Luft nicht durch das Filtermedium des Kraftstofffilters hindurch gelangt, sinkt der Flüssigkeitsspiegel in dem Kraftstofffilter, wodurch die effektiv zur Verfügung stehende Filterfläche erheblich reduziert ist. Außerdem bedeutet das Absinken des Flüssigkeitsspiegels, dass nur ein Teil der Filterfläche für die Filtration und Wasserabscheidung genutzt wird und nicht das gesamte Filterelement. Für die Wasserabscheidung wird jedoch eine vom Volumenstrom abhängige, bestimmte Filterfläche benötigt. Wird diese durch den sinkenden Flüssigkeitsspiegel unterschritten, so verschlechtert sich die Wasserabscheidung auf ein unzureichendes Niveau. Des Weiteren steigt gleichzeitig die Strömungsgeschwindigkeit im Filtermedium, was nachteilig für den Filtrationsprozess ist. Gleichzeitig steigt der Differenzdruck zwischen Roh- und Reinseite.

Zur Vermeidung der Luftansammlung auf der Rohseite wurden verschiedene Einrichtungen, wie z.B. Luftbohrungen oder Strömungsquerschnitte verwendet. Allerdings besteht, insbesondere bei Öffnungen für die Luft der Nachteil, dass auch verschmutzter Kraftstoff auf die Reinseite gelangt.

Aufgabe der Erfindung ist es daher, einen Kraftstofffilter zu schaffen, welcher im Saugbetrieb betrieben werden kann, ohne dass die Filterfläche durch die ausgasende Luft reduziert wird. Weiterhin ist zu verhindern, dass ungereinigter Kraftstoff auf die Reinseite des Filtermediums gelangt und so den Kraftstoff verunreinigt. Weiterhin soll der Kraftstofffilter einfach und kostengünstig herstellbar sein. Diese Aufgabe wird durch den Kraftstofffilter gemäß Anspruch 1 gelöst.

### Offenbarung der Erfindung

Der erfindungsgemäße Kraftstofffilter dient der Reinigung von Kraftstoff, wie z.B. Diesel. Hierbei sind Verunreinigungen aus dem Kraftstoff entfernbar, wodurch diese einen nachfolgenden Verbraucher nicht beschädigen können. Vorzugsweise ist der Kraftstofffilter zur Reinigung von Kraftstoffen für Brennkraftmaschinen von Fahrzeugen vorgesehen, insbesondere wenn eine Wasserabscheidung gefordert ist. Der Kraftstofffilter verfügt über ein Gehäuse und ein, in dem Gehäuse angeordnetes Filterelement. Das Gehäuse verfügt zumindest über einen Einlass und einen Auslass. Durch den Einlass strömt der zu reinigende Kraftstoff in das Gehäuse ein und durch den Auslass strömt der gereinigte Kraftstoff aus dem Gehäuse heraus. Das Gehäuse kann aus Metall und/oder Kunststoff bestehen. Sofern das Filterelement in dem Gehäuse austauschbar sein soll, muss das Gehäuse öffenbar sein. Hierbei ist es sinnvoll, wenn das Gehäuse über einen Behälter und einen Deckel verfügt. Das Filterelement ist derart in dem Gehäuse angeordnet, dass ein Reinbereich dichtend von einem Rohbereich getrennt ist. Der Rohbereich ist kommunizierend mit dem Einlass und der Reinbereich kommunizierend mit dem Auslass verbunden. Zwischen dem Rohbereich und dem Reinbereich ist mindestens ein Strömungskanal vorgesehen ist, wobei der Strömungskanal an einem geodätisch oberen Bereich in dem Kraftstofffilter angeordnet ist. Anstelle eines einzigen Strömungskanals können auch mehrere Strömungskanäle vorgesehen sein. Erfindungsgemäß ist der Strömungskanal an dem Filterelement angeordnet. Das Filterelement verfügt vorzugsweise über ein gefaltetes und ringförmig geschlossenes Filtermedium, welches mit Endscheiben stirnseitig abgedichtet ist. Bei der erfindungsgemäßen Anordnung des Strömungskanals an dem Filterelement ist dieser an der oberen Endscheibe angeordnet. Durch den Strömungskanal können bei einem entsprechenden Differenzdruck Gase von der Rohseite auf die Reinseite geleitet werden. Der Strömungskanal ist von einer Wand umgeben, wobei die Wand Teil des Gehäuses oder Filterelementes sein kann. Mit dieser Wand korrespondiert ein poröser, für Gase und Kraftstoff durchlässiger Filterkörper dichtend, wobei der Filterkörper für Verunreinigungen undurchlässig ist. Der Filterkörper kann, sowohl als dreidimensionaler poröser Körper, als auch als flaches oder gefaltetes Filterpapier oder Filtervlies ausgebildet sein. Der Filterkörper kann z.B. mit der Wand verklebt, verschweißt oder von der Wand umspritzt sein. Hierbei deckt der Filterkörper den Strömungskanal vollständig ab. Die Poren des Filterkörpers sind derart ausgestaltet, dass Gase, welche sich im oberen Bereich des Gehäuses sammeln, ab einem definierten Differenzdruck durch den Filterkörper hindurch strömen können. Beim Durchströmen der Gase durch den Filterkörper können die großen Gasblasen in sehr kleine Bläschen zerkleinert werden. Alternativ können die Gasblasen auch durch eine Blende oder eine besonders ausgeformte Kante, an der die Gasblasen entlang streichen, aufgesplittet und in kleine Bläschen verteilt werden. Diese kleinen Bläschen können dann dem gereinigten Kraftstoff beigemengt werden, ohne dass dies den Verbrennungsprozess negativ beeinflusst. Falls keine Gase in dem Gehäuse enthalten sind und der Kraftstoff in Kontakt mit dem Filterkörper kommt, wird der Kraftstoff, welcher durch den Strömungskanal hindurchströmt, durch den Filterkörper gereinigt. Somit gelangen keine Verunreinigungen von dem Rohbereich auf den Reinbereich. Damit die Gase durch den Filterkörper hindurch treten, ist vorzugsweise ein höherer Differenzdruck, als für den Durchtritt des Kraftstoffs durch das Filtermedium, erforderlich. Dieser Differenzdruck wird durch das Absinken des Flüssigkeitspegels in dem Kraftstofffilter und die dadurch reduzierte, zur Verfügung stehende Filterfläche erzeugt.

Bei einer weiteren Ausgestaltung der Erfindung ist eine Dichtung vorgesehen, welche bewirkt, dass Leckagen zwischen dem Filterkörper und der Wand verhindert werden. Hierbei kann die Dichtung aus einem Elastomer bestehen, welches beständig gegenüber dem Kraftstoff ist. Beispielsweise kann die Dichtung aus NBR oder FPM bestehen. Die Beständigkeit ist insbesondere gegenüber Diesel, Biodiesel und Ethanol erforderlich, damit die Dichtung nicht beschädigt wird und es dadurch zu Leckagen kommt. Durch die Verwendung einer elastischen Dichtung erhält man zusätzlich zu der Abdichtung zwischen der Wand und dem Filterkörper noch einen axialen Toleranzausgleich, wodurch Leckagen aufgrund von Fertigungstoleranzen verhindert werden.

Es ist vorteilhaft, wenn ein Käfig vorgesehen ist, in welchem der poröse Filterkörper zumindest teilweise angeordnet ist. Hierbei kann der Filterkörper zur Vormontage in den Käfig eingebracht werden. Somit kann der Filterkörper einfach in bzw. an dem Gehäuse befestigt werden. Der Käfig ist für die auszutragenden Gase bzw. den Kraftstoff durchlässig, somit ist der Filterkörper von allen Seiten anströmbar. Dies ist vorteilhaft, da so die effektive, durchströmbare Oberfläche des Filterkörpers besonders groß ist.

Bei einer besonderen Ausgestaltung der Erfindung verfügt der Käfig über Stege, wobei die Stege derart ausgestaltet sind, dass der Filterkörper mit einer Übermaßpassung gehalten ist. Somit wird die Montage des Filterkörpers in dem Gehäuse wesentlich vereinfacht. Bei einer Weiterbildung ist auch die Dichtung mit einer Übermaßpassung in dem Käfig gehalten, wodurch die komplett vormontierte Einheit aus dem Filterkörper, dem Käfig und der Dichtung mit einem Montagevorgang in dem Gehäuse fixiert werden kann.

Es ist besonders vorteilhaft, wenn der Käfig über Schnapphaken verfügt, mit welchen der Käfig an der Wand fixierbar ist. Somit wird die vormontierte Einheit nur auf die Wand aufgesetzt und mit einem leichten Druck montiert. Zur vereinfachten Montage können die Schnapphaken und/oder die Wand über Einführungsschrägen verfügen, mit welchen die Montage vereinfacht wird.

Gemäß einer Weiterbildung der Erfindung besteht der Käfig aus einem thermoplastischen Kunststoff, welcher im Kunststoffspritzgussverfahren herstellbar ist. Somit ist der Käfig einfach und kostengünstig herstellbar, wobei auch komplizierte Geometrien verwirklicht werden können.

Bei einer besonderen Ausgestaltung besteht der Filterkörper aus einem gesinterten Material, insbesondere aus Keramik. Durch die Materialauswahl bzw. Verarbeitung sind die Poren des Filterkörpers in ihren Eigenschaften beeinflussbar. Hierbei ist es vorteilhaft, wenn die Poren im Bereich von ca. 50 bis 150µm, insbesondere 80µm liegen, da in diesem Bereich ein optimaler Gasdurchtritt gewährleistet wird und die Verunreinigungen aus dem Kraftstoff nicht in den Reinbereich gelangen.

Der keramische Filterkörper kann in seiner Porengröße, Porosität und Zellengeometrie auf die jeweiligen Anforderungen angepasst werden. Hierbei kann der Filterkörper durch einen offen- oder geschlossenporigen Schaum ausgebildet sein. Um den Filterkörper zu bilden, kann ein Vorkörper aus einem Schaummaterial verwendet werden, der auf die erforderlichen Geometrien bearbeitet wurde. Mögliche Schaummaterialien sind z.B. vernetzte Polyethylene, PUR-Ether, Kaltschäume aus HR oder CMHR, PUR-Ester, Prepolymerschaum, Moosgummi, Latex-Schaum, Meleminharz-Schaum, Viskoseschaum, PVC-Schaum, Copolymerschaum PANA-Elasturan, Polypropylen-Schaum, Naturkautschuk, ChloroprenKautschuk, Ethylen-Propylen-Dien-Kautschuk, Nitril-Butadien-Rubber oder Styrol-Butadien-Kautschuk. Hierzu können beliebige Verfahren, wie z. B. Sägen, Thermoformen, Wasserstrahl- oder Laserschneiden verwendet werden. Der geformte Vorkörper wird mit einer geeigneten Suspension anorganisch sinterbarer Partikel durch z.B. übergießen oder tauchen, infiltriert. Anschließend wird die Form an der Luft oder unter definierten Bedingungen bezüglich Temperatur und Luftfeuchte getrocknet. Nach dem Trocknen wird der Filterkörper gesintert, wobei die Poren gebildet werden.

Bei einer weiteren Ausgestaltung der Erfindung ist der Filterkörper zylindrisch ausgebildet, wobei eine Stirnseite über dem Durchströmungskanal angeordnet ist. Die Umfangsfläche und die andere Stirnseite stehen mit dem Rohbereich in Kontakt, wodurch der Filterkörper axial und radial anströmbar ist.

### Kurze Beschreibung der Zeichnungen

Weitere Einzelheiten werden nachfolgend anhand der Figuren beschrieben. Hierbei zeigt

Figur 1 einen Kraftstofffilter im Schnitt,

Figur 2 einen Entlüftungseinheit in Explosionsdarstellung,

Figur 2A einen Ausschnitt aus dem Filterkörper gemäß Figur 2,

Figur 3 die Entlüftungseinheit gem. Figur 2 im vormontierten Zustand

Figur 4 einen Ausschnitt aus dem Kraftstofffilter gem. Figur1,

Figur 5 die schematische Darstellung eines Ausschnittes aus dem erfindungsgemäβ Kraftstofffilter, und

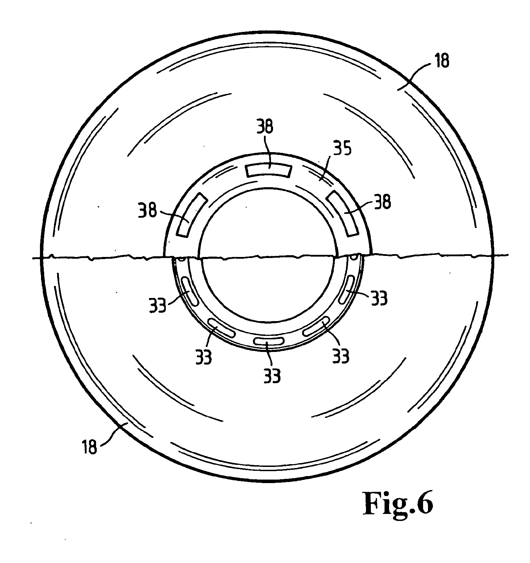

Figur 6 eine Draufsicht auf die Endscheibe des Kraftstofffilters gemäß Figur 5.

### Ausführungsform(en) der Erfindung

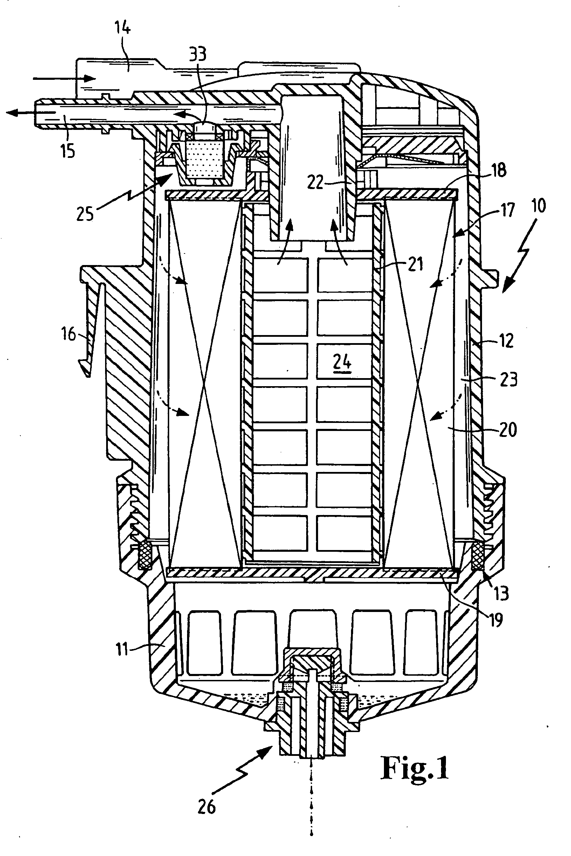

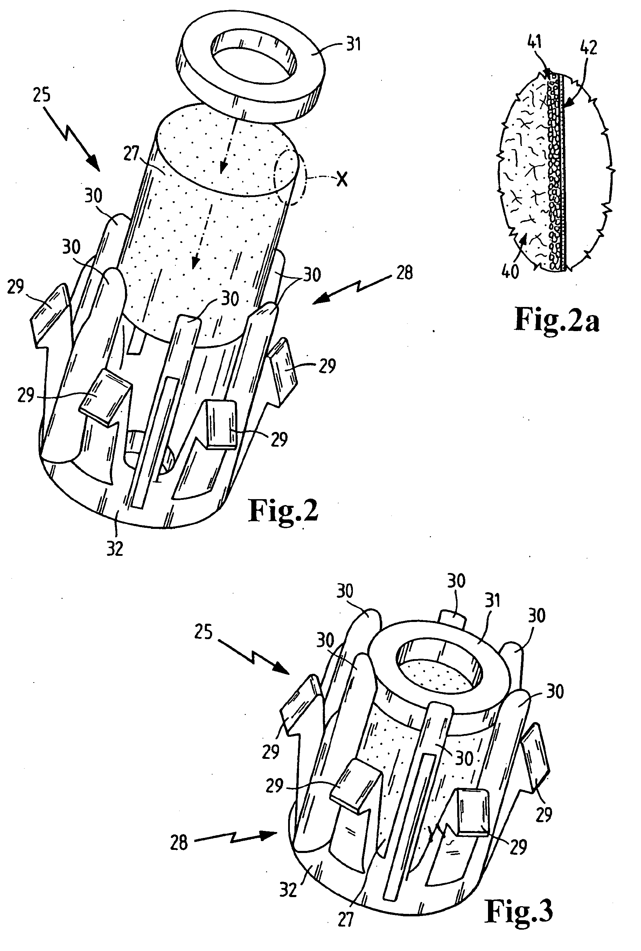

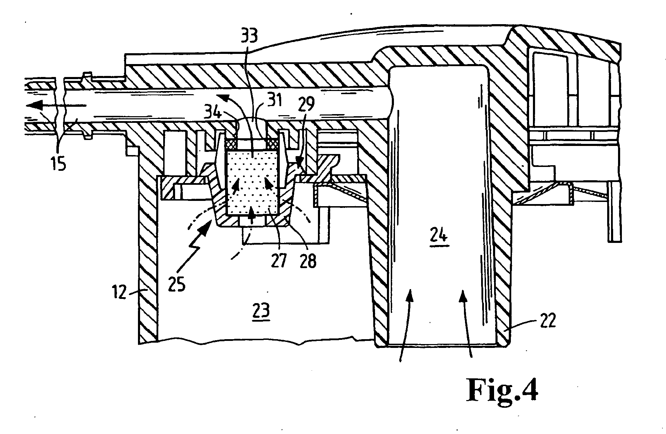

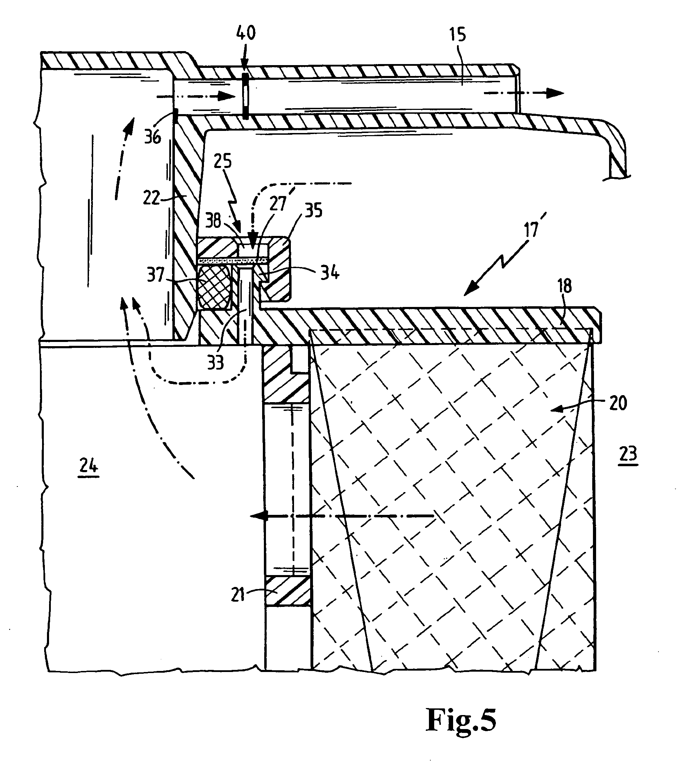

In Figur 1 ist ein nicht erfindungsgemäßer Flüssigkeitsfilter im Schnitt dargestellt. Der Flüssigkeitsfilter verfügt über ein zweiteiliges Gehäuse 10, welches aus Kunststoff besteht. Das Gehäuse 10 wird durch einen Gehäusedeckel 11 und einen Gehäusetopf 12 gebildet, wobei der Gehäusedeckel 11 dichtend mit dem Gehäusetopf 12 verschraubt ist. Hierzu ist eine Dichtung 13 im Bereich der Verschraubung vorgesehen. Der Gehäusetopf 12 ist derart ausgebildet, dass ein Kraftstoffeinlass 14 und ein Kraftstoffauslass 15 einstückig angeformt sind. Weiterhin ist an dem Gehäusetopf 12 ein Befestigungsclip 16 angeordnet, mit welchem das Gehäuse 10 z.B. im Motorraum eines Fahrzeuges befestigt werden kann. Innerhalb des Gehäuses 10 ist ein Filterelement 17 angeordnet, welches über eine obere Endscheibe 18 und eine untere Endscheibe 19 verfügt. Zwischen den Endscheiben 18, 19 erstreckt sich ein zick-zack-förmig gefaltetes Filtermedium 20. Das Filtermedium 20 ist ringförmig geschlossen, wobei innerhalb des geschlossenen Filtermediums 20 ein Stützkörper 21 angeordnet ist. Der Stützkörper 21 verhindert, dass das Filtermedium 20 bei großen Drücken bzw. hohen Durchflussraten deformiert bzw. beschädigt wird. Mit seiner oberen Endscheibe 18 ist das Filterelement 17 dichtend auf einen Auslassdom 22 aufgesteckt. Der Auslassdom 22 ist mit dem Kraftstoffauslass 15 kommunizierend verbunden, wobei der Auslassdom 22 ebenfalls einstückig mit dem Gehäusetopf 12 verbunden ist. Durch das Filterelement 17 wird in dem Gehäuse 10 ein Rohbereich 23 dichtend von einem Reinbereich 24 getrennt. Der Rohbereich 23 ist zwischen dem Filterelement 17 und dem Gehäuse 10 gebildet. Der Reinbereich 24 ist innerhalb des Filterelementes 17 angeordnet. Im geodätisch oberen Bereich des Gehäusetopfes 12 ist eine Entlüftungseinheit 25 angeordnet, welche anhand der nachfolgenden Figuren ausführlich beschrieben wird. Im geodätisch unteren Bereich des Gehäuses 10, welcher durch den Gehäusedeckel 11 gebildet ist, ist ein Wasserauslass 26 angeordnet. Der zu reinigende Kraftstoff strömt durch den Kraftstoffeinlass 14 in den Rohbereich 23 des Gehäuses 10 ein. Beim Durchströmen des Filtermediums 20 scheidet sich das im Kraftstoff enthaltene Wasser ab und sinkt in den unteren Bereich des Gehäuses 10 ab. Dort sammelt sich das Wasser oberhalb des Wasserauslasses 26. Der gereinigte Kraftstoff tritt durch das Filtermedium 20 hindurch in den Reinbereich 24, von wo aus der Kraftstoff zu dem Kraftstoffauslass 15 gelangt und den Kraftstofffilter verlässt. Beim Betreiben des Kraftstofffilters im Saugbetrieb findet eine Ausgasung der im Kraftstoff gelösten Gase statt. Diese Gase sammeln sich im oberen Bereich des Gehäuses 10 und bilden eine Gasblase. Damit die Gasblase im Laufe der Zeit nicht das gesamte Innenvolumen des Gehäuses 10 ausfüllt, ist die Entlüftungseinheit 25 im oberen Bereich vorgesehen. Durch diese Entlüftungseinheit 25 treten die Gase hindurch und werden dem gereinigten Kraftstoff wieder beigemengt. Hierbei werden die Gase in extrem kleine Luftbläschen zerkleinert, so dass diese den nachfolgenden Verbrennungsprozess nicht negativ beeinflussen können. In Figur 2 ist die Entlüftungseinheit 25 in Explosionsdarstellung gezeigt. Die Entlüftungseinheit 25 verfügt über einen porösen, zylinderförmigen Filterkörper 27, welcher aus gesinterter Keramik besteht. Die Poren des Filterkörpers 27 sind derart ausgelegt, dass die Gase hindurchströmen können und fein verteilt werden. Außerdem können im Kraftstoff enthaltene Schmutzpartikel nicht von dem Rohbereich 23 auf den Reinbereich 24 gelangen. Der Filterkörper 27 wird in einen Käfig 28 eingelegt, mit welchem der Filterkörper 27 in dem Gehäuse 10 (gemäß Figur 1) fixiert werden kann. Hierzu verfügt der Käfig 28 über Schnapphaken 29, welche am Umfang verteilt angeordnet sind. Weiterhin verfügt der Käfig 28 über Fixierstege 30, welche sich in axialer Richtung erstrecken und den Filterkörper 27 aufnehmen. Hierbei ist das durch die Fixierstege 30 gebildete Innenvolumen etwas kleiner als die Außenkontur des Filterkörpers 27, wodurch der Filterkörper 27 mit einer Übermaßpassung in dem Käfig 28 gehalten wird. Die Schnapphaken 29 und Fixierstege 30 erstrecken sich in axialer Richtung von einem Kreisringsegment 32, welches in seinem Mittenbereich für das Gas durchlässig ist. Die Entlüftungseinheit 25 verfügt weiterhin über eine kreisringförmige Dichtung 31, welche aus einem kraftstoffbeständigen Elastomer gebildet ist. Die Dichtung 31 verfügt über einen Außendurchmesser, welcher im Wesentlichen dem Durchmesser des Filterkörpers 27 entspricht. In Figur 2A ist ein vergrößerter Ausschnitt aus dem Filterkörper 27 dargestellt. Der Filterkörper verfügt über eine Trägerstruktur 40, welche aus einem keramisierten oder metallisierten Schaum besteht. Dieser Schaum ist zur Glättung der Oberfläche bzw. zur Verkleinerung der Poren, mit einem porös infiltrierten Bereich 41 versehen. Auf diesen Bereich 41 ist als oberstes eine funktionelle Schicht bzw. Trennschicht 42 aufgebracht. In Figur 3 ist die Entlüftungseinheit 25 gemäß Figur 2 im vormontierten Zustand dargestellt. Der Figur 2 entsprechende Bauteile sind mit gleichen Bezugszeichen versehen. Die Entlüftungseinheit kann einerseits einfach vormontiert und andererseits einfach in das Gehäuse montiert werden. In Figur 4 ist ein Ausschnitt aus dem Kraftstofffilter gemäß Figur 1 im Schnitt dargestellt. Der Figur 1 bzw. 2 entsprechende Bauteile sind mit gleichen Bezugszeichen versehen. Die Entlüftungseinheit 25 ist mit den Schnapphaken 29 an dem Gehäuse 12 fixiert. Zwischen dem Rohbereich 23 und dem Kraftstoffauslass 15 ist ein Strömungskanal 33 angeordnet, welcher von dem Filterkörper 27 überdeckt ist. Der Strömungskanal 33 ist von einem Dichtansatz 34 umgeben, auf welchem die Dichtung 31 aufliegt und so einen Leckagagestrom zwischen dem Filterkörper 27 und dem Gehäuse 10 verhindert. Weiterhin dient die Dichtung 31 als axialer Toleranzausgleich, so dass eine Montage der Schnapphaken 29 ermöglicht wird, ohne dass diese anschließend zuviel Spiel haben. In Figur 5 ist ein Ausschnitt aus dem erfindungsgemäß ausgestalteten Kraftstofffilter dargestellt. Bauteile, welche den vorangehenden Figuren entsprechen, sind mit gleichen Bezugszeichen versehen. Der Kraftstofffilter verfügt über ein Filterelement 17', das aus einem zick-zack-förmig gefalteten Filtermedium 20 besteht und konzentrisch um einen Auslassdom 22 angeordnet ist. Das Filtermedium 20 ist mit einer Endscheibe 18 stirnseitig abgedichtet. Der Kraftstoff strömt in Pfeilrichtung von dem Rohbereich 23 durch das Filtermedium 20 hindurch auf den Reinbereich 24, von wo aus der Kraftstoff durch den Auslassdom 22 dem Kraftstoffauslass 15 zugeführt wird. Oberhalb des Filterelementes befindet sich ebenfalls Kraftstoff, der ungereinigt ist, und eventuell vorhandene, aus dem Kraftstoff diffundierte Luft. Diese Luft bzw. Gase sammeln sich in dem geodätisch oberen Bereich, oberhalb der Endscheibe 18, in dem Kraftstofffilter. Um diese Gase in den Reinbereich 24 zu leiten, verfügt die Endscheibe 18 über einen oder mehrere Strömungskanäle 33. Diese Strömungskanäle 33 sind mit einem Filterkörper 27' abgedeckt, wobei der Filterkörper 27' als Filterpapierring ausgestaltet ist. Alternativ kann der Filterkörper 27' selbstverständlich auch aus anderen Medien wie z. B. einem keramischen Filterschaum bestehen. Der Filterpapierring verfügt bei diesem Ausführungsbeispiel über die gleichen Eigenschaften, wie das Filtermedium 20 und besteht vorzugsweise aus dem gleichen Material. Zur Fixierung des Filterpapierrings über den Strömungskanälen 33 ist ein Haltering 35 vorgesehen. Der Haltering 35 ist ähnlich einer Überwurfmutter ausgestaltet und derart fest mit der Endscheibe 18 verbunden, dass ein Verrutschen des Filterpapierrings 27' verhindert wird. Bei anderen Ausgestaltungen kann der Haltering 35 auch mit der Endscheibe 18 verschnappt, verklebt oder verschweißt sein, wodurch eine einfache Montage möglich ist. Weiterhin dient der Haltering 35 der Positionierung der Dichtung 37, welche zur Abdichtung des Filterelementes 17' auf dem Auslassdom 22 vorgesehen ist. Hierbei ist die Dichtung 37 an drei Seiten zwischen der Endscheibe 18, deren angeformten Strömungskanal 33 und dem Haltering 35 gekammert. Der Filterpapierring 27' ist sowohl luft- als auch flüssigkeitsdurchlässig. Dies bedeutet, dass ein geringer Flüssigkeitsstrom in strichpunktierter Pfeilrichtung durch den Strömungskanal 33 der Endscheibe 18 geleitet wird. Gleichzeitig wird aber auch Luft, die sich auf der Rohflüssigkeitsseite befindet, durch den Strömungskanal 33 hindurchgeleitet und kann in dem Reinbereich 24 über den Kraftstoffauslass 15 mit abströmen. Somit wird eine kontinuierliche Abführung der Gase aus dem Kraftstofffilter ermöglicht. Da der Filterkörper 27' direkt an dem Filterelement 17' angeordnet ist, wird dieser bei jedem Filterelementwechsel ebenfalls ausgetauscht, wodurch ein Zusetzen der Poren durch einen zu langen Einsatz in dem Kraftstofffilter verhindert wird. Die zur Entgasung erforderlichen Dimensionen können somit reduziert werden, da keine Reserven für die allmähliche Verblockung der Poren vorgesehen werden müssen. Sofern die Luft auf dem Reinbereich 24 größere Blasen bildet, ist es sinnvoll, diese Blasen zu zerteilen. Diese Zerteilung erfolgt durch eine Kante 36, welche in dem Kraftstoffauslass 15 angeordnet ist. Die Luftblasen streichen an dieser Kante entlang und werden dadurch aufgesplittet. Alternativ oder zusätzlich zu der Kante 36 kann auch eine Blende 40 verwendet werden, welche in dem Kraftstoffaustass 15 angeordnet sein kann. In dem oberen Halbschnitt der Figur 5 ist die Endscheibe 18 und der Haltering 35 in einer Draufsicht dargestellt. Der Figur 5 entsprechende Bauteile sind mit gleichen Bezugszeichen versehen. Der Haltering 35 verfügt über mehrere Durchtrittsöffnungen 38, welche als Fenster oder Bohrungen ausgestaltet sind. Im unteren Halbschnitt der Figur 5 ist die Endscheibe 18 ohne montierten Haltering 35 dargestellt. Hierbei ist zu erkennen, dass die Endscheibe 18 über mehrere Strömungskanäle 33 verfügt, welche gleichmäßig verteilt auf einem Kreis angeordnet sind. Die Lage und Größe der Strömungskanäle 33 und der Durchtrittsöffnungen 38 sind derart aufeinander abgestimmt, dass der Durchtritt der Luft von dem Strömungsquerschnitt 33 zu den Durchtrittsöffnungen 38 in jeder beliebigen Position des Halteringes 35 auf der Endscheibe 18 sichergestellt ist.

## Patentansprüche

1. Kraftstofffilter, insbesondere für Brennkraftmaschinen von Fahrzeugen, aufweisend ein Gehäuse (10) und ein Filterelement (17), wobei das Filterelement (17) derart in dem Gehäuse (10) angeordnet ist, dass ein Reinbereich (24) dichtend von einem Rohbereich (23) getrennt ist, wobei das Gehäuse (10) über einen Einlass (14) und einen Auslass (15) verfügt, wobei zwischen dem Rohbereich (23) und dem Reinbereich (24) ein Strömungskanal (33) vorgesehen ist, wobei der Strömungskanal (33) an einem geodätisch oberen Bereich in dem Kraftstofffilter angeordnet ist, wobei der Strömungskanal (33) mit einem porösen Filterkörper (27) verschlossen ist, und wobei der poröse Filterkörper (27) dichtend mit der um den Strömungskanal (33) angeordneten Wand (34) korrespondiert, wobei die Poren des Filterkörpers (27) derart ausgestaltet sind, dass Gase, welche sich im oberen Bereich des Gehäuses (10) sammeln, ab einem definierten Differenzdruck durch den Filterkörper (27) hindurch strömen können, **dadurch gekennzeichnet, dass** das Filterelement (17) über ein Filtermedium (20) verfügt, welches stirnseitig dichtend mit Endscheiben (18, 19) verbunden ist, und dass der Strömungskanal (33) an der geodätisch oberen Endscheibe (18) des Filterelementes (17) angeordnet ist, wobei die Endscheibe (18) die Wand (34) bildet.

2. Kraftstofffilter nach Anspruch 1, **dadurch gekennzeichnet, dass** der poröse Filterkörper (27) aus dem gleichen Material, wie das Filtermedium (20) des Filterelementes (17) besteht.

3. Kraftstofffilter nach einem der vorangehenden Ansprüche, **dadurch gekennzeichnet, dass** der Filterkörper (27) mittels einer Dichtung (31) dichtend mit der Wand (34) korrespondiert.

4. Kraftstofffilter nach einem der vorangehenden Ansprüche, **dadurch gekennzeichnet, dass** ein Käfig (28) vorgesehen ist, in welchem der poröse Filterkörper (27) angeordnet ist.

5. Kraftstofffilter nach Anspruch 4, **dadurch gekennzeichnet, dass** der Käfig (28) über Stege (30) verfügt, wobei die Stege (30) derart ausgestaltet sind, dass der Filterkörper (27)mit einer Übermaßpassung gehalten ist.

6. Kraftstofffilter nach einem der Ansprüche 4 oder 5, **dadurch gekennzeichnet dass** der Käfig (28) über Schnapphaken (29) verfügt, mit welchen der Käfig (28) an der Wand (34) fixierbar ist.

7. Kraftstofffilter nach einem der Ansprüche 4 bis 6, **dadurch gekennzeichnet, dass** der Käfig (28) aus einem thermoplastischen Kunststoff besteht, und im Kunststoffspritzguss herstellbar ist.

8. Kraftstofffilter nach einem der vorangehenden Ansprüche, **dadurch gekennzeichnet, dass** der Filterkörper (27) aus einem gesinterten Material, insbesondere aus Keramik, besteht.

9. Kraftstofffilter nach einem der vorangehenden Ansprüche, **dadurch gekennzeichnet, dass** der Filterkörper (27) zylindrisch ausgebildet ist.

## Claims

1. Fuel filter, in particular for internal combustion engines of vehicles, featuring a housing (10) and a filter element (17), the filter element (17) being disposed in the housing (10) in such a way that a clean area (24) is sealingly separated from a dirty area (23), the housing (10) having an inlet (14) and an outlet (15), a flow channel (33) being provided between the dirty area (23) and the clean area (24), the flow channel (33) being disposed at a geodetically upper area in the fuel filter, the flow channel (33) being closed with a porous filter body (27), and the porous filter body (27) corresponding sealingly with the wall (34) disposed around the flow channel (33), the pores of the filter body (27) being designed in such a way that gases which are collected in the upper area of the housing (10) can flow through the filter body (27) from a defined differential pressure, **characterized in that** the filter element (17) has a filter medium (20) which is sealingly connected at the front side with end plates (18, 19), and that the flow channel (33) is disposed at the geodetically upper end plate (18) of the filter element (17), the end plate (18) forming the wall (34).

2. Fuel filter according to claim 1, **characterized in that** the porous filter body (27) is made of the same material than the filter medium (20) of the filter element (17).

3. Fuel filter according to one of the above claims, **characterized in that** the filter body (27) corresponds sealingly with the wall (34) by means of a sealing (31).

4. Fuel filter according to one of the above claims, **characterized in that** a cage (28) is provided in which the porous filter body (27) is disposed.

5. Fuel filter according to claim 4, **characterized in that** the cage (28) has ribs (30), the ribs (30) being designed in such a way that the filter body (27) is held by means of an interference fit.

6. Fuel filter according to one of the claims 4 or 5, **characterized in that** the cage (28) has a snap-in hook (29) with which the cage (28) can be fixed at the wall (34).

7. Fuel filter according to one of the claims 4 to 6, **characterized in that** the cage (28) is made of thermoplastics and can be manufactured by means of plastic injection molding.

8. Fuel filter according to one of the above claims, **characterized in that** the filter body (27) consists of sintered material, in particular of ceramics.

9. Fuel filter according to one of the above claims, **characterized in that** the filter body (27) has a cylindrical design.

## Revendications

1. Filtre à carburant, notamment pour des moteurs à combustion interne de véhicules, présentant un boîtier (10) et un élément filtrant (17), l'élément filtrant (17) étant disposé dans le boîtier (10) de sorte qu'une zone pure (24) soit séparée d'une zone brute (23) avec un effet d'étanchéité, le boîtier (10) disposant d'une entrée (14) et d'une sortie (15), un canal d'écoulement (33) étant prévu entre la zone brute (23) et la zone pure (24), le canal d'écoulement (33) étant disposé dans le filtre à carburant dans une zone géodésiquement supérieure, le canal d'écoulement (33) étant obturé avec un corps de filtre poreux (27) et le corps de filtre poreux (27) correspondant de façon étanche avec la paroi (34) disposée autour du canal d'écoulement (33), les pores du corps de filtre (27) étant exécutées de telle manière que des gaz qui s'accumulent dans la zone supérieure du boîtier (10) puissent, à partir d'une pression différentielle définie, traverser le corps de filtre (27), **caractérisé en ce que** l'élément filtrant (17) est doté d'un milieu filtrant (20) qui est relié à l'avant, de façon étanche, avec des disques d'extrémité (18, 19) et **en ce que** le canal d'écoulement (33) est disposé sur le disque d'extrémité (18) géodésiquement supérieur de l'élément filtrant (17), le disque d'extrémité (18) formant la paroi (34).

2. Filtre à carburant selon la revendication 1, **caractérisé en ce que** le corps de filtre (27) poreux est fait de la même matière que le milieu filtrant (20) de l'élément filtrant (17).

3. Filtre à carburant selon l'une des revendications précédentes, **caractérisé en ce que** le corps de filtre (27) correspond de façon étanche, au moyen d'un joint (31), avec la paroi (34).

4. Filtre à carburant selon l'une des revendications précédentes, **caractérisé en ce qu'**une cage (28) dans laquelle est disposé le corps de filtre (27) poreux est prévue.

5. Filtre à carburant selon la revendication 4, **caractérisé en ce que** la cage (28) comprend des nervures (30), ces nervures (30) étant exécutées de manière à ce que le corps de filtre (27) soit maintenu avec un ajustement serré.

6. Filtre à carburant selon l'une des revendications 4 ou 5, **caractérisé en ce que** la cage (28) est pourvue de crochets encliquetables (29) qui permettent de fixer la cage (28) à la paroi (34).

7. Filtre à carburant selon l'une des revendications 4 à 6, **caractérisé en ce que** la cage (28) est réalisée dans une matière thermoplastique et peut être fabriquée selon un procédé de moulage par injection plastique.

8. Filtre à carburant selon l'une des revendications précédentes, **caractérisé en ce que** le corps de filtre (27) est constitué d'une matière frittée, notamment de céramique.

9. Filtre à carburant selon l'une des revendications précédentes, **caractérisé en ce que** le corps de filtre (27) est réalisé en forme cylindrique.
